# FASCICULE DE BREVET EUROPEEN

(11) **EP 2 454 196 B1**
(45) Date de publication et mention de la délivrance du brevet: **21.03.2018**
(21) Numéro de dépôt: 10726996.1
(22) Date de dépôt: 02.07.2010
(51) Int. Cl.: C01F 17/00, C01G 25/00, C01B 13/36, B01D 53/94, B01J 23/10, B01J 35/10, B01J 37/03

(54) **COMPOSITION A BASE D'OXYDE DE CERIUM ET D'OXYDE DE ZIRCONIUM DE POROSITE SPECIFIQUE, PROCEDE DE PREPARATION ET UTILISATION EN CATALYSE**
ZUSAMMENSETZUNG MIT CEROXID UND ZIRKONOXID MIT SPEZIFISCHER POROSITÄT, ZUSAMMENSETZUNGSVERFAHREN UND IHRE VERWENDUNG FÜR KATALYSATOREN
COMPOSITION COMPRISING CERIUM OXIDE AND ZIRCONIUM OXIDE HAVING A SPECIFIC POROSITY, PREPARATION METHOD THEREOF AND USE OF SAME IN CATALYSIS

(30) Priorité: 17.07.2009 FR 0903506
(43) Date de publication de la demande: 23.05.2012
(73) Titulaire: Rhodia Opérations, 93306 Aubervilliers (FR)
(72) Inventeur: IFRAH, Simon, F-17140 Lagord (FR); LARCHER, Olivier, Pennington NJ 08534 (US)
(74) Mandataire: Senninger, Thierry
(86) Numéro de dépôt international: PCT/EP2010/059465
(87) Numéro de publication internationale: WO 2011/006780

(56) Documents cités:
- EP-A1- 1 621 251
- EP-A1- 1 920 830
- EP-B1- 1 444 036
- DI MONTE R ET AL: "A rationale for the development of thermally stable nanostructured CeO2-ZrO2-containing mixed oxides" JOURNAL OF RARE EARTHS, INTERNATIONAL ACADEMIC PUBLISHERS, BEIJING, CN, vol. 26, no. 2, 1 avril 2008 (2008-04-01), pages 136-140, XP022934012 ISSN: 1002-0721 [extrait le 2008-04-01]
- R. DI MONTE, J. KASPER: "Nanostructured CeO2-ZrO2 mixed oxides" JOURNAL OF MATERIALS CHEMISTRY, vol. 15, no. 6, 1 décembre 2004 (2004-12-01), pages 633-648, XP002574365 The Royal Society of Chemistry, Cambridge, GB DOI: 10.1039/b414244f
- E. ROHART, O. LARCHER, S. DEUTSCH, C. HÉDOUIN, H. AÏMIN, F. FAJARDIE, M. ALLAIN, P. MACAUDIÈRE: "From Zr-Rich to Ce-Rich: Thermal Stability of OSC Materials on the Whole Range of Composition" TOPICS IN CATALYSIS, vol. 30/31, no. 1, juillet 2004 (2004-07), pages 417-423, XP002574364 Springer, Netherlands ISSN: 1022-5528 DOI: 10.1023/B:TOCA.0000029784.75813.81
- LIN S S Y ET AL: "Co/CeO2-ZrO2 catalysts prepared by impregnation and coprecipitation for ethanol steam reforming" APPLIED CATALYSIS A: GENERAL, ELSEVIER SCIENCE, AMSTERDAM, NL, vol. 366, no. 2, 25 septembre 2009 (2009-09-25), pages 252-261, XP026520641 ISSN: 0926-860X [extrait le 2009-07-14]

## Description

La présente invention concerne une composition à base d'oxyde de cérium et d'oxyde de zirconium de porosité spécifique, son procédé de préparation et son utilisation en catalyse.

On utilise à l'heure actuelle pour le traitement des gaz d'échappement des moteurs à combustion interne (catalyse postcombustion automobile) des catalyseurs dits multifonctionnels. Par multifonctionnels, on entend les catalyseurs capables d'opérer non seulement l'oxydation en particulier du monoxyde de carbone et des hydrocarbures présents dans les gaz d'échappement mais également la réduction en particulier des oxydes d'azote également présents dans ces gaz (catalyseurs "trois voies"). L'oxyde de zirconium et l'oxyde de cérium apparaissent aujourd'hui comme deux constituants particulièrement importants et intéressants pour ce type de catalyseurs.

Les produits de ce type doivent présenter une porosité adaptée à leur utilisation. Ainsi, ils doivent comporter des pores de taille suffisamment grande pour permettre une bonne diffusion des gaz.

Toutefois, ces mêmes produits doivent aussi présenter des pores de petites tailles car ce sont ces pores qui contribuent à donner aux produits une surface spécifique suffisamment élevée pour que ceux-ci soient utilisables en catalyse.

Il est donc intéressant de trouver un bon compromis entre une surface importante, apportée par les pores de petites tailles et une meilleure diffusion des gaz apportée par les pores de grandes tailles.

L'invention a pour objet de proposer un produit réalisant ce compromis.

Dans ce but, la composition selon l'invention est à base d'oxyde de cérium et d'oxyde de zirconium dans une proportion en oxyde de cérium d'au moins 30% en masse, et elle est caractérisée en ce qu'elle présente après calcination à une température de 900°C pendant 4 heures, deux populations de pores dont les diamètres respectifs sont centrés, pour la première, autour d'une valeur comprise entre 5 nm et 15 nm pour une composition dont la teneur en oxyde de cérium est comprise entre 30% et 65% ou d'une valeur comprise entre 10 nm et 20 nm pour une composition dont la teneur en oxyde de cérium est supérieure à 65% et, pour la seconde, autour d'une valeur comprise entre 45 nm et 65 nm pour une composition dont la teneur en oxyde de cérium est comprise entre 30% et 65% ou d'une valeur comprise entre 60 nm et 100 nm pour une composition dont la teneur en oxyde de cérium est supérieure à 65%.

Comme on le verra plus loin, les compositions de l'invention présentent une population significative de pores de petite taille qui contribue à donner une surface spécifique importante même à température élevée.

Par ailleurs, comme autre avantage, les compositions de l'invention se présentent sous forme de particules qui peuvent être facilement désagglomérées et qui peuvent conduire à des particules de taille nettement plus petite, ce qui rend ces compositions particulièrement intéressantes dans les applications en catalyse.

D'autres caractéristiques, détails et avantages de l'invention apparaîtront encore plus complètement à la lecture de la description qui va suivre faite en référence aux dessins annexés dans lesquels :
- la figure 1 est un porogramme d'une composition selon l'invention après calcination à 900°C;
- la figure 2 est un porogramme d'une composition selon l'invention après calcination à 1000°C.

On précise aussi pour la suite de la description que, sauf indication contraire, dans toutes les gammes ou limites de valeurs qui sont données, les valeurs aux bornes sont incluses, les gammes ou limites de valeurs ainsi définies couvrant donc toute valeur au moins égale et supérieure à la borne inférieure et/ou au plus égale ou inférieure à la borne supérieure.

Pour la présente description on entend par terre rare les éléments du groupe constitué par l'yttrium et les éléments de la classification périodique de numéro atomique compris inclusivement entre 57 et 71.

On entend par surface spécifique, la surface spécifique B.E.T. déterminée par adsorption d'azote conformément à la norme ASTM D 3663-78 établie à partir de la méthode BRUNAUER - EMMETT- TELLER décrite dans le périodique "The Journal of the American Chemical Society, 60, 309 (1938)".

En outre, les calcinations à l'issue desquelles sont données les valeurs de surface sont des calcinations sous air.

Les teneurs sont données en masse d'oxyde sauf indication contraire par rapport à la masse totale de la composition. L'oxyde de cérium est sous forme d'oxyde cérique, les oxydes des autres terres rares sous forme Ln₂O₃, Ln désignant la terre rare, à l'exception du praséodyme exprimé sous la forme Pr₆O₁₁.

Les valeurs de granulométrie sont obtenues par des mesures utilisant la technique de diffraction laser et réalisées avec un appareil de type Coulter.

Les compositions de l'invention se présentent selon deux modes de réalisation qui diffèrent par la nature de leurs constituants.

Selon le premier mode, ces compositions sont à base d'oxyde de cérium et d'oxyde de zirconium. Plus précisément, il peut s'agir de compositions qui consistent en, ou qui consistent essentiellement en de l'oxyde de cérium et de l'oxyde de zirconium. On entend par là que la composition ne contient pas d'autre oxyde d'un autre élément qui puisse être un élément constitutif de cette composition et/ou un stabilisant de la surface de celle-ci, comme par exemple une terre rare. Par contre la compositon peut contenir les impuretés habituellement présentes avec le cérium et le zirconium.

Dans le cas du second mode de réalisation de l'invention, les compositions sont à base d'oxyde de cérium, d'oxyde de zirconium et d'au moins un oxyde d'une terre rare autre que le cérium. Il s'agit donc dans ce cas de compositions qui contiennent au moins trois oxydes. La terre rare autre que le cérium peut être notamment choisie parmi l'yttrium, le lanthane, le néodyme et le praséodyme. On peut citer ainsi plus particulièrement comme compositions selon ce second mode celles à base d'oxyde de cérium, d'oxyde de zirconium, d'oxyde de lanthane et d'oxyde de praséodyme, à base d'oxyde de cérium, d'oxyde de zirconium, d'oxyde de lanthane et d'oxyde de néodyme, à base d'oxyde de cérium, d'oxyde de zirconium, d'oxyde de lanthane et d'oxyde d'yttrium.

Toujours pour le second mode, l'invention doit être comprise comme s'appliquant au cas où la composition consiste en, ou consiste essentiellement en de l'oxyde de cérium, de l'oxyde de zirconium et en au moins un autre oxyde d'une autre terre rare, la composition ne contenant alors pas d'oxyde d'un élément autre que les trois précités et qui pourrait être un élément constitutif de cette composition et/ou un stabilisant de la surface de celle-ci. Dans ce cas, là encore, la composition peut contenir les impuretés habituellement présentes avec les éléments zirconium et terres rares.

En outre et pour les deux modes de réalisation précités, les compositions de l'invention ne contiennent pas d'élément de type métal noble ou métal précieux en tant qu'élément constitutif. On entend au sens de la présente invention et pour ce type de métal par « élément constitutif » le fait que le métal concerné pourrait être présent au sein de la composition, sous forme d'un mélange intime avec les autres éléments cérium, zirconium et, le cas échéant, terre rare autre que le cérium, un tel mélange intime étant obtenu par exemple lorsque le métal noble ou précieux est mis en oeuvre lors de la préparation même de la composition. Les termes « élément constitutif », appliqués audit métal noble ou précieux, ne s'appliquent par contre pas, au sens de la présente invention, au cas qui sera décrit plus loin, dans lequel, pour des utilisations dans le domaine de la catalyse par exemple, le métal noble ou précieux est utilisé en mélange avec une composition de l'invention qui a été préalablement préparée.

La teneur en cérium et en zirconium des compositions de l'invention, quel que soit le mode de réalisation, peut varier dans de larges proportions, étant entendu que la teneur en oxyde de cérium est d'au moins environ 30%. Généralement, cette teneur est telle que le rapport Ce/Zr exprimé en masse d'oxydes de ces éléments est compris entre 3/10 et 9/10, plus particulièrement entre 2,5/2 et 8/2.

Dans le cas du second mode de réalisation, la teneur en oxyde de la terre rare autre que le cérium peut être plus particulièrement d'au plus 20% en masse. Cette teneur peut être plus particulièrement d'au plus 15% et encore plus particulièrement d'au plus 10%. Elle est aussi habituellement d'au moins 1% et plus particulièrement d'au moins 5%.

Selon des variantes de l'invention, la teneur en oxyde de cérium peut être plus particulièrement d'au moins 40%, notamment dans le cas des compositions selon le second mode de réalisation, et encore plus particulièrement d'au moins 50%.

Comme on l'a vu plus haut, la caractéristique principale des compositions de l'invention est leur porosité.

Ainsi, après calcination à 900°C pendant quatre heures, les compositions de l'invention présentent deux populations de pores bien distinctes et qui sont centrées autour des valeurs données plus haut.

On indique ici et pour l'ensemble de la description que les porosités indiquées sont mesurées par porosimétrie par intrusion de mercure conformément à la norme ASTM D 4284-83 (Standard method for determining pore volume distribution of catalysts by mercury intrusion porosimetry).

La méthode de mesure de porosité donnée ci-dessus permet d'établir de manière connues des porogrammes donnant le volume poreux en fonction de la taille des pores (V = f(d), V désignant le volume poreux et d désignant le diamètre des pores). A partir de ce porogramme il est possible d'obtenir, toujours de manière connue, une courbe (C) donnant la dérivée de V en fonction de d. Cette courbe peut présenter des pics en fonction du diamètre des pores.

Au sens de l'invention on entend par « population de pores centrée autour d'une valeur donnée », la présence dans la courbe (C) d'un pic dont le maximum est situé à cette valeur donnée.

Une caractéristique intéressante des compositions de l'invention est le fait qu'elles conservent cette double population de pores, et donc les avantages qui y sont liés, même à température élevée, par exemple même à une température supérieure à 900°C.

Ainsi, les compositions de l'invention, après calcination à une température de 1000°C pendant 4 heures, présentent toujours deux populations de pores de petite taille et de taille plus grande. Pour la première population les diamètres des pores sont centrés autour d'une valeur comprise entre 8 et 20 nm et, pour la seconde, les diamètres sont centrés autour d'une valeur comprise entre 30 nm et 70 nm pour les compositions dont la teneur en oxyde de cérium est comprise entre 30% et 50% ou entre 70 nm et 80 nm pour les compositions dont la teneur en oxyde de cérium est supérieure à 50%.

La seconde population de pores est une population resserrée ou monodisperse car la plus grande partie des pores de cette population présentent une taille qui reste très proche de la valeur autour de laquelle est centré le pic correspondant. Cette caractéristique peut se mesurer par le rapport de la largueur I du pic à sa mi hauteur à la largueur L du pic à sa ligne de base. Ainsi ce rapport I/L, mesuré sur les porogrammes après calcination à 900°C ou 1000°C, est généralement d'au moins 30%, plus particulièrement d'au moins 40%.

Les compositions de l'invention présentent en outre un volume poreux total qui est élevé. Ainsi, les compositions après calcination à 900°C, 4 heures, présentent un volume poreux total d'au moins 0,6 ml Hg/g. Ce volume poreux peut être plus particulièrement d'au moins 0,7 ml Hg/g. A cette même température, une valeur de volume poreux d'environ 0,90 ml Hg/g peut être atteinte.

Ce volume poreux total reste encore important à température plus élevée. Par exemple après calcination à une température de 1000°C pendant 4 heures, les compositions peuvent présenter un volume poreux total d'au moins 0,5 ml Hg/g, plus particulièrement d'au moins 0,65 ml Hg/g. A cette même température, une valeur de volume poreux d'environ 0,70 ml Hg/g peut être atteinte.

Le volume poreux total mentionné ici est celui qui résulte des pores dont le diamètre est compris entre 3 nm et 100 µm.

Une autre caractéristique intéressante de l'invention est que les pores de petite taille, celle de la première population précitée, contribuent à une proportion assez importante du volume poreux total. Cette proportion dépend de la température à laquelle a été calcinée la composition, elle est plus élevée pour les compositions ayant été calcinées aux températures plus basses et elle peut varier généralement entre 5 et 20%.

Ainsi, cette proportion peut être comprise entre 8 et 12% dans le cas d'une calcination à 900°C 4 heures.

La porosité spécifique des compositions de l'invention induit une surface spécifique importante de celles-ci.

Ainsi, les compositions de l'invention peuvent présenter après calcination à 900°C, 4 heures, une surface spécifique d'au moins 30 m²/g, plus particulièrement d'au moins 45 m²/g pour les compositions selon le second mode de réalisation. Après calcination à cette même température des valeurs de surface jusqu'à environ 35 m²/g et jusqu'à environ 55 m²/g peuvent être obtenues pour les compositions selon le premier et le second mode de réalisation respectivement.

Les valeurs de surface peuvent rester importantes à température encore plus élevées. Après calcination à 1000°C, 4 heures, la surface spécifique peut être d'au moins 15 m²/g pour le premier mode de réalisation et d'au moins 30 m²/g pour les compositions selon le second mode de réalisation. Après calcination à cette même température des valeurs de surface jusqu'à environ 17 m²/g et jusqu'à environ 45 m²/g peuvent être obtenues pour les compositions selon le premier et le second mode de réalisation respectivement.

La surface spécifique des compositions de l'invention peut être d'au moins 5 m²/g pour le premier mode de réalisation et d'au moins 15 m²/g pour les compositions selon le second mode de réalisation après calcination sur la même durée mais à 1100°C.

Enfin, après calcination à 1200°C, 10 heures, une surface spécifique d'au moins 5 m²/g peut être obtenue.

Une autre caractéristique particulièrement intéressante des compositions de l'invention est leur facilité à être désagglomérées.

Les compositions de l'invention se présentent en effet généralement à l'issue de leur préparation sous forme de particules dont la taille moyenne (d₅₀) est habituellement comprise entre 7 µm et 20 µm.

Ces particules sont en fait des agglomérats qui sont facilement désagglomérables en agrégats de taille moyenne nettement plus fine, notamment d'au plus 3 µm, plus particulièrement d'au plus 2 µm, qui sont constitués de cristallites agrégés les uns aux autres.

On entend par « facilement désagglomérables » le fait que l'on peut passer des agglomérats aux agrégats par un traitement qui ne nécessite pas une énergie importante, contrairement à un broyage de type micronisation ou de type humide par exemple. Ce traitement peut être par exemple une désagglomération par ultra-sons ou par mise en suspension.

Le fait d'obtenir facilement les agrégats, c'est-à-dire avec une faible énergie, est une caractéristique intéressante des compositions de l'invention. Ainsi dans les applications en catalyse, il est important de disposer facilement de produits fins pour leur mise en forme par exemple pour les revêtements (washcoats) destinés à être déposés sur les monolithes.

On peut noter par ailleurs que les compositions de l'invention présentent une bonne pureté phasique. Ces compositions peuvent se présenter ainsi sous forme de solutions solides jusqu'à des températures élevées, c'est-à-dire même après calcination à 1100°C en particulier pour les compositions selon le second mode de réalisation.

On entend par solution solide le fait que les diagrammes en diffraction RX de ces compositions après calcination à une température donnée révèlent l'existence d'une phase unique clairement identifiable. La nature de cette phase unique dépend de la proportion respective des différents éléments de la composition. Pour les compositions plutôt riches en cérium cette phase correspond en fait à une structure cristalline de type fluorine tout comme l'oxyde cérique CeO₂ cristallisé, et dont les paramètres de mailles sont plus ou moins décalés par rapport à un oxyde cérique pur, traduisant ainsi l'incorporation du zirconium et, le cas échéant, de l'autre terre rare dans le réseau cristallin de l'oxyde de cérium, et donc l'obtention d'une solution solide vraie. Dans le cas des compositions plutôt riches en zirconium, la phase correspond à celle d'un oxyde de zirconium cristallisé dans le système tétragonal, dont les paramètres de mailles peuvent aussi être décalés et traduisant de même l'incorporation du cérium et, éventuellement de l'autre élément dans le réseau cristallin de l'oxyde de zirconium.

Le procédé de préparation des compositions de l'invention va maintenant être décrit.

Ce procédé comprend les étapes suivantes :
- on forme un premier milieu liquide qui comprend un composé du zirconium, un composé de cérium III, des ions sulfates, un agent oxydant et, le cas échéant, un composé de la terre rare autre que le cérium;
- on met en contact le milieu précédent avec une base ce par quoi on forme un précipité;
- on sépare le précipité et on le lave;
- on remet en suspension dans l'eau le précipité issu de l'étape précédente et on soumet le milieu ainsi formé à un traitement thermique à une température d'au moins 90°C;
- on sépare le précipité et on le calcine.

La première étape du procédé consiste à former un milieu liquide qui est l'eau, de préférence, et dans lequel se trouvent, dans les quantités nécessaires, des composés des différents éléments qui rentrent dans la constitution de la composition que l'on cherche à préparer. Il s'agit donc des composés du zirconium, du cérium et, dans le cas de la préparation d'une composition selon le second mode de réalisation, de la ou des terres rares autres que le cérium.

Ces composés seront de préférence des composés solubles. Ce peut être notamment des sels de ces éléments.

Un certain nombre de conditions doivent être respectées en ce qui concerne ces composés.

Le composé du cérium est un composé dans lequel cet élément est sous forme III. On peut mentionner plus particulièrement les halogénures et notamment le chlorure ainsi que le nitrate.

Pour le zirconium on peut utiliser le nitrate de zirconyle ou le chlorure de zirconyle, le sulfate de zirconium, plus particulièrement un ortho sulfate de zirconium ou encore un sulfate basique de zirconium.

Pour la ou les terres rares autres que le cérium les composés peuvent être choisis parmi les nitrates, les sulfates, les acétates, les chlorures.

Le milieu liquide de départ doit en outre contenir un agent oxydant qui peut être, par exemple, de l'eau oxygénée.

Le milieu liquide de départ doit aussi contenir des ions sulfates. Ces ions sulfates doivent être présents dans une quantité telle que le rapport atomique ions sulfates/Zr soit d'au moins 0,5, de préférence au moins 2.

Ces ions sulfates peuvent être apportés par exemple par de l'acide sulfurique. Ils peuvent aussi être apportés au moins en partie par le composé de zirconium lorsque celui-ci est un composé de type sulfate.

La deuxième étape du procédé consiste à mettre en contact le milieu liquide préparé à la première étape avec une base. On peut utiliser comme base les produits du type hydroxyde. On peut citer les hydroxydes d'alcalins ou d'alcalino-terreux. On peut aussi utiliser les amines secondaires, tertiaires ou quaternaires. Toutefois, les amines et l'ammoniaque peuvent être préférés dans la mesure où ils diminuent les risques de pollution par les cations alcalins ou alcalino terreux. On peut aussi mentionner l'urée. La base peut être plus particulièrement utilisée sous forme d'une solution.

Selon un mode de réalisation particulier de l'invention, la mise en présence entre le premier milieu liquide et la base peut se faire en introduisant le milieu dans la base par exemple en introduisant le milieu dans un réacteur qui contient la base en pied de cuve.

La mise en présence ou la réaction entre le premier milieu liquide et la base, peut être effectuée en une seule fois, graduellement ou en continu, et elle est de préférence réalisée sous agitation. Elle est de préférence conduite à une température d'au moins 45°C.

La réaction avec la base conduit à la formation d'un précipité. Ce précipité est séparé du milieu réactionnel dans lequel il a été obtenu par tout moyen connu, par exemple par filtration.

Le précipité séparé est lavé avec de l'eau afin d'éliminer les sulfates encore présents dans le précipité. Ce lavage pouvant se faire avec de l'eau à température ambiante ou encore avec de l'eau chaude, par exemple à une température d'au moins 50°C.

L'étape suivante du procédé est l'étape de traitement thermique du précipité en milieu aqueux.

Ce traitement thermique est réalisé sur une suspension obtenue après remise dans l'eau du précipité lavé. La température à laquelle est chauffé le milieu est d'au moins 90°C, plus particulièrement d'au moins 100°C et encore plus particulièrement d'au moins 150°C et elle peut être comprise entre 150°C et 200°C. L'opération de traitement thermique peut être conduite en introduisant le milieu liquide dans une enceinte close (réacteur fermé du type autoclave). Dans les conditions de températures données ci-dessus, et en milieu aqueux, on peut ainsi préciser, à titre illustratif, que la pression dans le réacteur fermé peut varier entre une valeur supérieure à 1 Bar (10⁵ Pa) et 165 Bar (1,65. 10⁷ Pa), de préférence entre 5 Bar (5. 10⁵ Pa) et 165 Bar (1,65. 10⁷ Pa). Le traitement thermique peut être conduit soit sous air, soit sous atmosphère de gaz inerte, de préférence l'azote.

La durée du traitement thermique peut varier dans de larges limites, par exemple entre 1 et 48 heures, de préférence entre 1 et 24 heures. De même, la montée en température s'effectue à une vitesse qui n'est pas critique, et on peut ainsi atteindre la température réactionnelle fixée en chauffant le milieu par exemple entre 30 minutes et 4 heures, ces valeurs étant données à titre tout à fait indicatif.

Dans une dernière étape du procédé selon l'invention, le précipité récupéré est séparé du milieu dans lequel a eu lieu le traitement thermique par tout moyen convenable, par exemple par filtration et il est ensuite calciné. Cette calcination permet de développer la cristallinité du produit formé et elle peut être également ajustée et/ou choisie en fonction de la température d'utilisation ultérieure réservée à la composition selon l'invention, et ceci en tenant compte du fait que la surface spécifique du produit est d'autant plus faible que la température de calcination mise en oeuvre est plus élevée. Une telle calcination est généralement opérée sous air, mais une calcination menée par exemple sous gaz inerte ou sous atmosphère contrôlée (oxydante ou réductrice) n'est bien évidemment pas exclue.

En pratique, on limite généralement la température de calcination à un intervalle de valeurs comprises entre 500 et 900°C, plus particulièrement entre 600°C et 800°C.

Suivant une variante, le précipité peut être séparé par atomisation du milieu liquide dans lequel a eu lieu le traitement thermique.

On entend par séchage par atomisation un séchage par pulvérisation du mélange dans une atmosphère chaude (spray-drying). L'atomisation peut être réalisée au moyen de tout pulvérisateur connu en soi, par exemple par une buse de pulvérisation du type pomme d'arrosoir ou autre. On peut également utiliser des atomiseurs dits à turbine. Sur les diverses techniques de pulvérisation susceptibles d'être mises en oeuvre dans le présent procédé, on pourra se référer notamment à l'ouvrage de base de MASTERS intitulé "SPRAY-DRYING" (deuxième édition, 1976, Editions George Godwin - London).

A l'issue de l'atomisation le précipité séché ainsi obtenue est soumis à la calcination dans les conditions qui ont été données précédemment.

Les compositions de l'invention telles que décrites plus haut ou telles qu'obtenues par le procédé décrit précédemment se présentent sous forme de poudres mais elles peuvent éventuellement être mises en forme pour se présenter sous forme de granulés, billes, cylindres ou nids d'abeille de dimensions variables.

Les compositions de l'invention peuvent être utilisées comme catalyseurs ou supports de catalyseur. Ainsi, l'invention concerne aussi des systèmes catalytiques comprenant les compositions de l'invention. Pour de tels systèmes, ces compositions peuvent ainsi être appliquées sur tout support utilisé habituellement dans le domaine de la catalyse, c'est à dire notamment des supports inertes thermiquement. Ce support peut être choisi parmi l'alumine, l'oxyde de titane, l'oxyde de cérium, l'oxyde de zirconium, la silice, les spinelles, les zéolites, les silicates, les phosphates de silicoaluminium cristallins, les phosphates d'aluminium cristallins.

Les compositions peuvent aussi être utilisées dans des systèmes catalytiques comprenant un revêtement (wash coat) à propriétés catalytiques et à base de ces compositions, sur un substrat du type par exemple monolithe métallique ou en céramique. Le revêtement peut comporter lui aussi un support du type de ceux mentionnés plus haut. Ce revêtement est obtenu par mélange de la composition avec le support de manière à former une suspension qui peut être ensuite déposée sur le substrat.

Ces systèmes catalytiques et plus particulièrement les compositions de l'invention peuvent trouver de très nombreuses applications. Ils sont ainsi particulièrement bien adaptés à, et donc utilisable dans la catalyse de diverses réactions telles que, par exemple, la déshydratation, l'hydrosulfuration, l'hydrodénitrification, la désulfuration, l'hydrodésulfuration, la déshydrohalogénation, le reformage, le reformage à la vapeur, le craquage, l'hydrocraquage, l'hydrogénation, la déshydrogénation, l'isomérisation, la dismutation, l'oxychloration, la déshydrocyclisation d'hydrocarbures ou autres composés organiques, les réactions d'oxydation et/ou de réduction, la réaction de Claus, le traitement des gaz d'échappement des moteurs à combustion interne, la démétallation, la méthanation, la shift conversion, l'oxydation catalytique des suies émises par les moteurs à combustion interne comme les moteurs diesel ou essence fonctionnant en régime pauvre. Les systèmes catalytiques et les compositions de l'invention peuvent enfin être utilisés comme pièges à NOx ou pour favoriser la réduction des NOx même en milieu oxydant ou encore comme catalyseurs dans un procédé de décomposition du N₂O par exemple dans une unité de fabrication de l'acide nitrique ou dans une unité statique.

Dans le cas de ces utilisations en catalyse, les compositions de l'invention sont employées en combinaison avec des métaux précieux, elles jouent ainsi le rôle de support pour ces métaux. La nature de ces métaux et les techniques d'incorporation de ceux-ci dans les compositions supports sont bien connues de l'homme du métier. Par exemple, les métaux peuvent être le platine, le rhodium, le palladium ou l'iridium, ils peuvent notamment être incorporés aux compositions par imprégnation.

Parmi les utilisations citées, le traitement des gaz d'échappement des moteurs à combustion interne (catalyse post combustion automobile) constitue une application particulièrement intéressante. De ce fait, l'invention concerne aussi un procédé de traitement des gaz d'échappement des moteurs à combustion interne qui est caractérisé en ce qu'on utilise à titre de catalyseur un système catalytique tel que décrit ci-dessus ou une composition selon l'invention et telle que décrite précédemment.

Des exemples vont maintenant être donnés.

Dans ces exemples, les porosités sont mesurées par la technique et selon la norme mentionnées plus haut et dans les conditions de mesure plus particulières suivantes :
- les échantillons soumis à la mesure subissent un dégazage de 10 heures à 100°C dans une étuve ventilée à 100°C. Ils présentent une masse de 300 mg environ.
- on utilise un pénétromètre n° 14 à poudre dont la cellule est de 3,28 cm³ avec un capillaire de 0,413 cm³.
- la mesure est effectuée avec un angle de contact de 130° et une table de pression en intrusion et extrusion.

### EXEMPLE 1

Cet exemple concerne la préparation d'une composition à base d'oxyde de zirconium et d'oxyde de cérium dans les proportions respectives en masse d'oxyde de 20% et 80%.

Le composé de zirconium utilisé est l'ortho sulfate de zirconium, en solution, obtenu par dissolution de sulfate basique de zirconium par de l'acide sulfurique à température ambiante et dont la concentration est de 253,5 g/l avec une densité de 1,478, le composé de cérium est un nitrate de cérium Ce(NO₃)₃, en solution, dont la concentration est de 496 g/l avec une densité de 1,716.

Un mélange des composés ci-dessus est réalisé dans les quantités appropriées pour obtenir un oxyde final de composition visée; on ajoute ensuite 140 ml d'H₂O₂ à 35% dans ce mélange.

La solution obtenue est diluée jusqu'à une concentration de 100 g/l puis elle est introduite goutte à goutte dans un pied de cuve basique (constitué de 1500 ml de NH₄OH à 5mol/l) sous agitation continue. Après précipitation semi-continue par sur verse dans un second réacteur agité de façon continu, le précipité obtenu est filtré puis lavé deux fois consécutivement avec repulpage. La concentration dans le réacteur de précipitation est de 100 g/l durant toute la réaction.

Le précipité obtenu dans le réacteur de sur verse est remis en suspension dans l'eau à 100 g/l puis il est introduit dans un autoclave durant 1 heure à 200°C sous agitation. Le précipité est ensuite calciné sous air à 850°C pendant deux heures.

La composition ainsi obtenue présente les caractéristiques suivantes :

| Surface spécifique | |
|---|---|
| 900°C 4 heures | 30 m²/g |
| 1000°C 4 heures | 15 m²/g |
| 1100°C 4 heures | 7 m²/g |
| Première population de pores | centrée à 15 nm à 900°C 4 heures |
| Seconde population de pores | centrée à 80 nm à 900°C 4 heures |
| Rapport I/L du pic correspondant à la seconde population de pores | 45% |
| Porosité totale | 0, 63 mlHg/g |

Après calcination à 1100°C 4 heures, la composition se présente sous la forme d'une phase cristallographique fluorine cubique pure.

### EXEMPLE 2

Cet exemple concerne la préparation d'une composition à base d'oxyde de zirconium, d'oxyde de cérium, d'oxyde de lanthane et d'oxyde de praséodyme dans les proportions respectives en masse d'oxydes de 30%, 60%, 3% et 7%.

Les composés de zirconium et de cérium utilisés sont les mêmes que dans l'exemple 1. Le composé de lanthane est un La(NO₃)₃, en solution, avec une concentration de 454 g/l et une densité de 1,687 et le composé de praséodyme est sous forme de Pr(NO₃)₃, en solution, à 500 g/l avec une densité de 1,732.

Un mélange des composés ci-dessus est réalisé dans les quantités appropriées pour obtenir un oxyde final de composition visée, on ajoute ensuite 107 ml d'H₂O₂ (concentration 11,6 mol/l et densité 1,132) dans ce mélange.

La solution obtenue est diluée jusqu'à une concentration de 100 g/l puis est introduite goutte à goutte dans un pied de cuve basique (constitué de 1500 ml de NH₄OH à 5mol/l) sous agitation continue. Après précipitation et une heure d'agitation à 50°C le précipité obtenu est filtré puis lavé deux fois consécutivement avec repulpage.

Le précipité obtenu est remis en suspension dans l'eau à 100 g/l pour être introduit dans un autoclave durant 1 heure à 200°C sous agitation. Le précipité est ensuite calciné sous air à 850°C pendant deux heures.

La composition ainsi obtenue présente les caractéristiques suivantes :

| Surface spécifique | | |
|---|---|---|
| 900°C 4 heures | 54 m²/g | |
| 1000°C 4 heures | 36 m²/g | |
| 1100°C 4 heures | 19 m²/g | |
| Première population de pores | centrée à 10 nm à 900°C 4 heures | centrée à 15 nm à 1000°C 4 heures |
| Seconde population de pores | centrée à 45 nm à 900°C 4 heures | centrée à 60 nm à 1000°C 4 heures |
| Rapport I/L du pic correspondant à la seconde population de pores | 42% | 35% |
| Porosité totale | 0,85 mlHg/g | 0,67 mlHg/g |
| Granulométrie (D50) (900°C 4 heures) | avant désagglomération 11 µm | après désagglomération* 1,6 µm |

| | | |
|---|---|---|
| * Désagglomération par ultra-sons pendant 5 minutes avec une puissance de 120W. | | |

Après calcination à 1100°C 4 heures, la composition se présente sous la forme d'une phase cristallographique fluorine cubique pure.

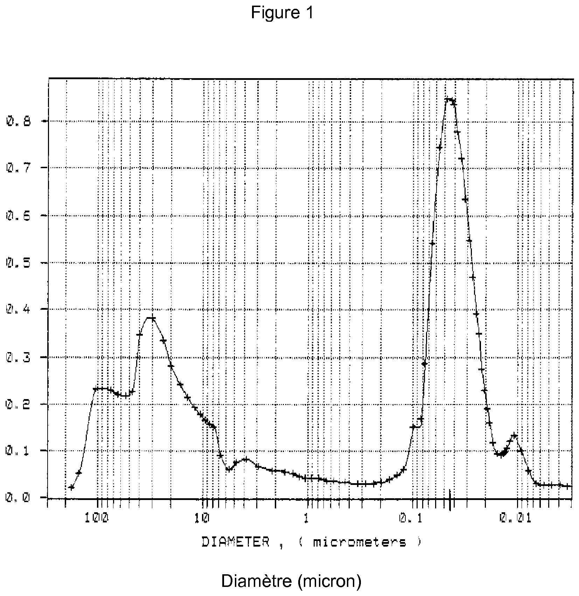

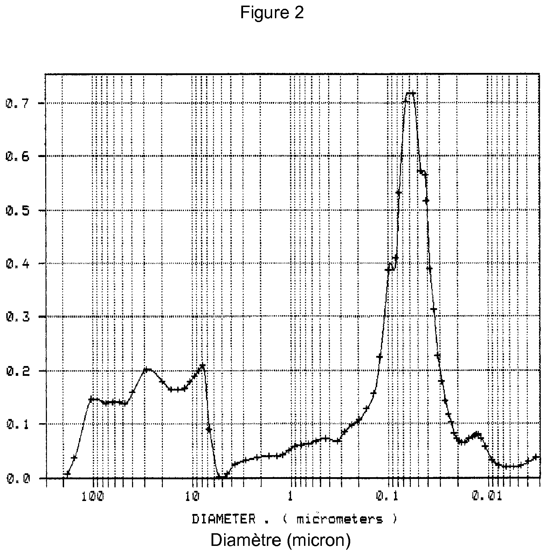

La figure 1 est le porogramme de la composition de l'exemple 2 après calcination à 900°C, 4 heures. On voit bien un premier pic, en partant de la droite du porogramme, centré vers 10 nm et un second pic centré vers 45 nm. La figure 2 est un porogramme de la même composition mais après calcination à 1000°C, 4 heures. On retrouve les mêmes pics que sur le porogramme précédent mais avec un décalage de ceux-ci vers la gauche, le premier centré à 15 nm et le second à 60 nm.

## Revendications

1. Composition à base d'oxyde de cérium et d'oxyde de zirconium, dans une proportion en oxyde de cérium d'au moins 30% en masse, présentant après calcination à une température de 900°C pendant 4 heures, deux populations de pores dont les diamètres respectifs sont centrés autour d'une valeur comprise:
▪ entre 5 et 15 nm pour la 1^{ère} population et entre 45 et 65 nm pour la 2^{nde} population si la proportion en oxyde de cérium est comprise entre 30% et 65% ; ou bien
▪ entre 10 et 20 nm pour la 1^{ère} population et entre 60 et 100 nm pour la 2^{nde} population si la proportion en oxyde de cérium est supérieure à 65%,
l'expression "population de pores centrée autour d'une valeur donnée" signifiant que sur la courbe (C) donnant la dérivée de la fonction V=f(d), V représentant le volume poreux en fonction du diamètre de pores d, on observe la présence dans la courbe (C) d'un pic dont le maximum est situé à cette valeur donnée.

2. Composition à base d'oxyde de cérium et d'oxyde de zirconium, dans une proportion en oxyde de cérium d'au moins 30% en masse, présentant après calcination à une température de 1000°C pendant 4 heures, deux populations de pores dont les diamètres respectifs sont centrés autour d'une valeur comprise :
▪ entre 8 et 20 nm pour la 1^{ère} population et entre 30 et 70 nm pour la 2^{nde} population si la proportion en oxyde de cérium est comprise entre 30% et 50% ; ou bien
▪ entre 8 et 20 nm pour la 1^{ère} population et entre 70 et 80 nm pour la 2^{nde} population si la proportion en oxyde de cérium est supérieure à 50%,
l'expression "population de pores centrée autour d'une valeur donnée" signifiant que sur la courbe (C) donnant la dérivée de la fonction V=f(d), V représentant le volume poreux en fonction du diamètre de pores d, on observe la présence dans la courbe (C) d'un pic dont le maximum est situé à cette valeur donnée.

3. Composition selon la revendication 1, **caractérisée en ce que**, après calcination à 900°C pendant 4 heures, elle présente un volume poreux total résultant des pores dont le diamètre est compris entre 3 nm et 100 µm, d'au moins 0,6 ml Hg/g.

4. Composition selon la revendication 2, **caractérisée en ce que**, après calcination à 1000°C pendant 4 heures, elle présente un volume poreux total résultant des pores dont le diamètre est compris entre 3 nm et 100 µm, d'au moins 0,5 ml Hg/g.

5. Composition selon l'une des revendications 1 ou 2, **caractérisée en ce que**, après calcination à 900°C pendant 4 heures, les pores de la première population contribuent à un volume poreux représentant une proportion du volume poreux total comprise entre 8 et 12%.

6. Composition selon l'une des revendications précédentes, **caractérisée en ce qu'**elle comprend au moins un oxyde d'une terre rare autre que le cérium, qui peut être plus particulièrement choisie parmi l'yttrium, le lanthane, le néodyme et le praséodyme.

7. Composition selon l'une des revendications précédentes, **caractérisée en ce qu'**elle présente une teneur en cérium et en zirconium telle que le rapport Ce/Zr exprimé en masse d'oxydes de ces éléments est compris entre 3/10 et 9/10.

8. Composition selon l'une des revendications 1 à 6, **caractérisée en ce qu'**elle présente une teneur en cérium et en zirconium telle que le rapport Ce/Zr exprimé en masse d'oxydes de ces éléments est compris entre 2,5/4 et 8/2.

9. Composition selon la revendication 6 à 8, **caractérisée en ce qu'**elle présente une teneur en terre rare autre que le cérium, exprimée en masse d'oxyde d'au plus 20%.

10. Composition selon l'une des revendications précédentes, **caractérisée en ce qu'**elle présente une teneur en oxyde de cérium d'au moins 40%, plus particulièrement d'au moins 50%.

11. Composition selon l'une des revendications précédentes, **caractérisée en ce qu'**après calcination à 1100°C, elle se présente sous forme d'une solution solide.

12. Composition selon l'une des revendications 1, 3 ou 5 à 11, **caractérisée en ce qu'**elle présente après calcination à 900°C, 4 heures une surface spécifique d'au moins 30 m²/g.

13. Composition selon l'une des revendications 1 à 5 et 7 à 12 en combinaison avec la revendication 1 ou la revendication 2, **caractérisée en ce qu'**elle présente après calcination à 1000°C, 4 heures une surface spécifique d'au moins 15 m²/g.

14. Composition selon la revendication 6 ou selon l'une des revendications 7 à 12 en combinaison avec la revendication 6, **caractérisée en ce qu'**elle présente après calcination à 1000°C, 4 heures une surface spécifique d'au moins 30 m²/g.

15. Composition selon l'une des revendications précédentes, **caractérisée en ce qu'**elle présente après calcination à 1200°C, 10 heures une surface spécifique d'au moins 5 m²/g.

16. Composition selon l'une des revendications précédentes, **caractérisée en ce qu'**elle se présente sous forme de particules de taille moyenne comprise entre 7 µm et 20 µm, désagglomérables en particules de taille moyenne d'au plus 3 µm.

17. Procédé de préparation d'une composition selon l'une des revendications précédentes, **caractérisé en ce qu'**il comprend les étapes suivantes :
- on forme un premier milieu liquide qui comprend un composé du zirconium, un composé de cérium III, des ions sulfates, un agent oxydant et, le cas échéant, un composé de la terre rare autre que le cérium;
- on met en contact le milieu précédent avec une base ce par quoi on forme un précipité;
- on sépare le précipité et on le lave;
- on remet en suspension dans l'eau le précipité issu de l'étape précédente et on soumet le milieu ainsi formé à un traitement thermique à une température d'au moins 90°C;
- on sépare le précipité et on le calcine.

18. Procédé selon la revendication 17, **caractérisé en ce qu'**on utilise comme composé du zirconium un orthosulfate de zirconium.

19. Procédé selon la revendication 17 ou 18, **caractérisé en ce que** la mise en contact du premier milieu liquide précité avec la base se fait dans un réacteur contenant ladite base en pied de cuve, par introduction dudit milieu dans le réacteur.

20. Système catalytique, **caractérisé en ce qu'**il comprend une composition selon l'une des revendications 1 à 16.

21. Procédé de traitement des gaz d'échappement des moteurs à combustion interne, **caractérisé en ce qu'**on utilise à titre de catalyseur un système catalytique selon la revendication 20 ou une composition selon l'une des revendications 1 à 16.

## Patentansprüche

1. Zusammensetzung auf der Basis von Ceroxid und Zirkonoxid mit einem Anteil an Ceroxid von mindestens 30 Masse-%, die nach Kalzinierung bei einer Temperatur von 900°C während 4 Stunden zwei Populationen von Poren aufweist, deren jeweilige Durchmesser um einen Wert:
▪ zwischen 5 und 15 nm für die 1. Population und zwischen 45 und 65 nm für die 2. Population zentriert sind, wenn der Anteil an Ceroxid zwischen 30% und 65% beträgt, oder
▪ zwischen 10 und 20 nm für die 1. Population und zwischen 60 und 100 nm für die 2. Population zentriert sind, wenn der Anteil an Ceroxid höher als 65% ist,
wobei der Ausdruck "Population von Poren, die um einen gegebenen Wert zentriert sind" bedeutet, dass man auf der Kurve (C), die die Ableitung der Funktion V=f(d) darstellt, wobei V für das Porenvolumen in Abhängigkeit vom Porendurchmesser d steht, das Vorhandensein einer Spitze in der Kurve (C) beobachtet, deren Maximum sich bei dem gegebenen Wert befindet.

2. Zusammensetzung auf der Basis von Ceroxid und Zirkonoxid mit einem Anteil an Ceroxid von mindestens 30 Masse-%, die nach Kalzinierung bei einer Temperatur von 1000°C während 4 Stunden zwei Populationen von Poren aufweist, deren jeweilige Durchmesser um einen Wert:
▪ zwischen 8 und 20 nm für die 1. Population und zwischen 30 und 70 nm für die 2. Population zentriert sind, wenn der Anteil an Ceroxid zwischen 30% und 50% beträgt, oder
▪ zwischen 8 und 20 nm für die 1. Population und zwischen 70 und 80 nm für die 2. Population zentriert sind, wenn der Anteil an Ceroxid höher als 50% ist,
wobei der Ausdruck "Population von Poren, die um einen gegebenen Wert zentriert sind" bedeutet, dass man auf der Kurve (C), die die Ableitung der Funktion V=f(d) darstellt, wobei V für das Porenvolumen in Abhängigkeit vom Porendurchmesser d steht, das Vorhandensein einer Spitze in der Kurve (C) beobachtet, deren Maximum sich bei dem gegebenen Wert befindet.

3. Zusammensetzung nach Anspruch 1, **dadurch gekennzeichnet, dass** sie nach Kalzinierung bei 900°C während 4 Stunden die Zusammensetzung ein Gesamtporenvolumen, das aus Poren resultiert, deren Durchmesser zwischen 3 nm und 100 µm beträgt, von mindestens 0,6 ml Hg/g aufweist.

4. Zusammensetzung nach Anspruch 2, **dadurch gekennzeichnet, dass** sie nach Kalzinierung bei 1000°C während 4 Stunden ein Gesamtporenvolumen, das aus Poren resultiert, deren Durchmesser zwischen 3 nm und 100 µm beträgt, von mindestens 0,5 ml Hg/g aufweist.

5. Zusammensetzung nach einem der Ansprüche 1 oder 2, **dadurch gekennzeichnet, dass** nach Kalzinierung bei 900°C während 4 Stunden die Poren der ersten Population ein Porenvolumen beitragen, das einen Anteil des Gesamtporenvolumens zwischen 8 und 12% darstellt.

6. Zusammensetzung nach einem der vorhergehenden Ansprüche, **dadurch gekennzeichnet, dass** sie mindestens ein Oxid eines anderen Seltenerdeelements als Cer umfasst, das insbesondere aus Yttrium, Lanthan, Neodym und Praseodym ausgewählt werden kann.

7. Zusammensetzung nach einem der vorhergehenden Ansprüche, **dadurch gekennzeichnet, dass** sie einen derartigen Gehalt an Cer und Zirkon aufweist, dass das Verhältnis Ce/Zr, ausgedrückt als Masse der Oxide dieser Elemente, zwischen 3/10 und 9/10 beträgt.

8. Zusammensetzung nach einem der Ansprüche 1 bis 6, **dadurch gekennzeichnet, dass** sie einen derartigen Gehalt an Cer und Zirkon aufweist, dass das Verhältnis Ce/Zr, ausgedrückt als Masse der Oxide dieser Elemente, zwischen 2,5/4 und 8/2 beträgt.

9. Zusammensetzung nach Anspruch 6 bis 8, **dadurch gekennzeichnet, dass** sie einen Gehalt an einem anderen Seltenerdeelement als Cer, ausgedrückt als Masse des Oxids, von höchstens 20% aufweist.

10. Zusammensetzung nach einem der vorhergehenden Ansprüche, **dadurch gekennzeichnet, dass** sie einen Gehalt an Ceroxid von mindestens 40%, insbesondere mindestens 50% aufweist.

11. Zusammensetzung nach einem der vorhergehenden Ansprüche, **dadurch gekennzeichnet, dass** sie nach Kalzinierung bei 1100°C in Form einer festen Lösung vorliegt.

12. Zusammensetzung nach einem der Ansprüche 1, 3 oder 5 bis 11, **dadurch gekennzeichnet, dass** sie nach Kalzinierung bei 900°C, 4 Stunden eine spezifische Oberfläche von mindestens 30 m²/g aufweist.

13. Zusammensetzung nach einem der Ansprüche 1 bis 5 und 7 bis 12 in Kombination mit Anspruch 1 oder Anspruch 2, **dadurch gekennzeichnet, dass** sie nach Kalzinierung bei 1000°C, 4 Stunden eine spezifische Oberfläche von mindestens 15 m²/g aufweist.

14. Zusammensetzung nach Anspruch 6 oder nach einem der Ansprüche 7 bis 12 in Kombination mit Anspruch 6, **dadurch gekennzeichnet, dass** sie nach Kalzinierung bei 1000°C, 4 Stunden eine spezifische Oberfläche von mindestens 30 m²/g aufweist.

15. Zusammensetzung nach einem der vorhergehenden Ansprüche, **dadurch gekennzeichnet, dass** sie nach Kalzinierung bei 1200°C, 10 Stunden eine spezifische Oberfläche von mindestens 5 m²/g aufweist.

16. Zusammensetzung nach einem der vorhergehenden Ansprüche, **dadurch gekennzeichnet, dass** sie in Form von Teilchen mit einer mittleren Größe zwischen 7 µm und 20 µm vorliegt, die zu Teilchen mit einer mittleren Größe von höchstens 3 µm desagglomeriert werden können.

17. Verfahren zur Herstellung einer Zusammensetzung nach einem der vorhergehenden Ansprüche, **dadurch gekennzeichnet, dass** es die folgenden Schritte umfasst:
- man stellt ein erstes flüssiges Medium her, das eine Zirkon-Verbindung, eine Cer(III)-Verbindung, Sulfationen, ein Oxidationsmittel und gegebenenfalls eine Verbindung eines anderen Seltenerdeelements als Cer umfasst;
- man bringt das vorstehende flüssige Medium mit einer Base in Kontakt, wodurch ein Niederschlag gebildet wird;
- man trennt den Niederschlag ab und wäscht ihn;
- man resuspendiert den aus dem vorhergehenden Schritt erhaltenen Niederschlag in Wasser und unterzieht das so hergestellte Medium einer thermischen Behandlung bei einer Temperatur von mindestens 90°C;
- man trennt den Niederschlag ab und kalziniert ihn.

18. Verfahren nach Anspruch 17, **dadurch gekennzeichnet, dass** man als Zirkon-Verbindung ein Zirkonorthosulfat verwendet.

19. Verfahren nach Anspruch 17 oder 18, **dadurch gekennzeichnet, dass** das Inkontaktbringen des vorstehenden ersten flüssigen Mediums mit der Base in einem Reaktor, der die Base als Vorlage enthält, durch Einbringen des Mediums in den Reaktor durchgeführt wird.

20. Katalytisches System, **dadurch gekennzeichnet, dass** es eine Zusammensetzung nach einem der Ansprüche 1 bis 16 umfasst.

21. Verfahren zur Behandlung eines Abgases von Verbrennungsmotoren, **dadurch gekennzeichnet, dass** man als Katalysator ein katalytisches System nach Anspruch 20 oder eine Zusammensetzung nach einem der Ansprüche 1 bis 16 verwendet.

## Claims

1. Composition based on cerium oxide and zirconium oxide containing at least 30 wt% cerium oxide; having, after calcination at a temperature of 900°C for 4 hours, two populations of pores, the respective diameters of which are centered around a value of:
▪ between 5 and 15 nm for the 1^{st} population and between 45 and 65 nm for the 2^{nd} population if the proportion of cerium oxide is between 30% and 65%; or else
▪ between 10 and 20 nm for the 1^{st} population and between 60 and 100 nm for the 2^{nd} population if the proportion of cerium oxide is higher than 65%,
the expression "pore population centred around a given value" meaning that, on the curve (C) giving the derivative of the function V=f(d), V representing the pore volume as function of the pore diameter d, the presence, in the curve (C), of a peak is observed the maximum of which is located at this given value.

2. Composition based on cerium oxide and zirconium oxide containing at least 30 wt% cerium oxide, having, after calcination at a temperature of 1000°C for 4 hours, two populations of pores, the respective diameters of which are centered around a value of:
▪ between 8 and 20 nm for the 1^{st} population and between 30 and 70 nm for the 2^{nd} population if the proportion of cerium oxide is between 30% and 50%; or else
▪ between 8 and 20 nm for the 1^{st} population and between 70 and 80 nm for the 2^{nd} population if the proportion of cerium oxide is higher than 50%,
the expression "pore population centred around a given value" meaning that, on the curve (C) giving the derivative of the function V=f(d), V representing the pore volume as a function of the pore diameter d, the presence, in the curve (C), of a peak is observed the maximum of which is located at this given value.

3. Composition according to Claim 1, **characterized in that**, after calcination at 900°C for 4 hours, it has a total pore volume, resulting from pores the diameter of which is between 3 nm and 10 µm, of at least 0.6 ml Hg/g.

4. Composition according to Claim 2, **characterized in that**, after calcination at 1000°C for 4 hours, it has a total pore volume, resulting from pores the diameter of which is between 3 nm and 10 µm, of at least 0.5 ml Hg/g.

5. Composition according to either of Claims 1 and 2, **characterized in that**, after calcination at 900°C for 4 hours, the pores of the first population contribute a pore volume representing a proportion of the total pore volume of between 8 and 12%.

6. Composition according to one of the preceding claims, **characterized in that** it comprises at least one oxide of a rare earth other than cerium, which may more particularly be chosen from yttrium, lanthanum, neodymium and praseodymium.

7. Composition according to one of the preceding claims, **characterized in that** it has a cerium and zirconium content such that the Ce/Zr ratio expressed by mass of oxides of these elements is between 3/10 and 9/10.

8. Composition according to one of the preceding claims, **characterized in that** it has a cerium and zirconium content such that the Ce/Zr ratio expressed by mass of oxides of these elements is between 2.5/4 and 8/2.

9. Composition according to Claim 6 to 8, **characterized in that** it has a content of a rare earth other than cerium, expressed by mass of oxide, of at most 20%.

10. Composition according to one of the preceding claims, **characterized in that** it has a cerium oxide content of at least 40% and more particularly of at least 50%.

11. Composition according to one of the preceding claims, **characterized in that** it, after calcination at 1100°C, it takes the form of a solid solution.

12. Composition according to one of Claims 1, 3 or 5 to 11, **characterized in that** it has a specific surface area of at least 30 m²/g after calcination at 900°C for 4 hours.

13. Composition according to one of Claims 1 to 5 and 7 to 12 in combination with Claim 1 or Claim 2, **characterized in that** it has, after calcination at 1000°C for 4 hours, a specific surface area of at least 15 m²/g.

14. Composition according to Claim 6 or according to one of Claims 7 to 12 in combination with Claim 6, **characterized in that** it has, after calcination at 1000°C for 4 hours, a specific surface area of at least 30 m²/g.

15. Composition according to one of the preceding claims, **characterized in that** it has a specific surface area of at least 5 m²/g after calcination at 1200°C for 10 hours.

16. Composition according to one of the preceding claims, **characterized in that** it takes the form of particles with a mean size of between 7 µm and 20 µm, which can be deagglomerated into particles having a mean size of at most 3 µm.

17. Method of preparing a composition according to one of the preceding claims, **characterized in that** it comprises the following steps:
- a first liquid medium is formed, this comprising a zirconium compound, a cerium III compound, sulfate ions, an oxidizing agent and, where appropriate, a compound of a rare earth other than cerium;
- the above medium is brought into contact with a base, whereby a precipitate is formed;
- the precipitate is separated and washed;
- the precipitate resulting from the previous step is resuspended in water and the medium thus formed is subjected to a heat treatment at a temperature of at least 90°C; and
- the precipitate is separated and calcined.

18. Method according to Claim 17, **characterized in that** a zirconium orthosulfate is used as zirconium compound.

19. Method according to Claim 17 or 18, **characterized in that** the step of bringing the aforementioned first liquid medium into contact with the base takes place in a reactor containing said base as stock, via introducing said medium into the reactor.

20. Catalytic system, **characterized in that** it comprises a composition according to one of Claims 1 to 16.

21. Method of treating the exhaust gas of internal combustion engines, **characterized in that** a catalytic system according to Claim 20 or a composition according to one of Claims 1 to 16 is used as catalyst.
